# EUROPEAN PATENT SPECIFICATION

(11) **EP 3 795 706 B1**
(45) Date of publication and mention of the grant of the patent: **24.04.2024**
(21) Application number: 18855188.1
(22) Date of filing: 15.05.2018
(51) Int. Cl.: C01B 21/082, C04B 35/58, C04B 35/626, C22C 1/051, C22C 29/04, B22F 5/00

(54) **CERMET, CUTTING TOOL CONTAINING SAME, AND METHOD FOR PRODUCING CERMET**
CERMET, SCHNEIDWERKZEUG DAMIT UND VERFAHREN ZUR HERSTELLUNG VON CERMET
CERMET, OUTIL DE COUPE CONTENANT CELUI-CI ET PROCÉDÉ DE PRODUCTION DE CERMET

(43) Date of publication of application: 24.03.2021
(73) Proprietor: Sumitomo Electric Industries, Ltd., Osaka-shi, Osaka 541-0041 (JP)
(72) Inventor: MICHIUCHI, Masato, Osaka-shi, Osaka 5410041 (JP); OKAMURA, Katsumi, Osaka-shi, Osaka 5410041 (JP)
(74) Representative: Boult Wade Tennant LLP
(86) International application number: PCT/JP2018/018741
(87) International publication number: WO 2019/220533

(56) References cited:
- EP-A1- 2 564 958
- EP-A1- 3 587 609
- EP-A1- 3 613 864
- CA-A1- 3 003 856
- JP-A- H 091 405
- JP-A- H04 231 467
- JP-A- 2010 031 308
- JP-A- 2013 181 188

## Description

### TECHNICAL FIELD

The present invention relates to cermet, a cutting tool containing the same, and a method of manufacturing cermet.

### BACKGROUND ART

Cemented carbide and cermet have been known as a hard material containing Ti. Since such a hard material is excellent in wear resistance, it is suitably used for a cutting tool and a wear-resistant tool. For example, WO2010/008004 (PTL 1) discloses a sintered hard alloy composed of a hard phase and a binder phase, the hard phase containing at least 90 volume % of a composite carbonitride solid solution expressed as (Ti₁₋ₓMₓ)(C_{1-y}N_{y}) with respect to the entire hard phase. WO2011/136197 (PTL 2) discloses cermet composed of a first hard phase composed of a composite carbonitride solid solution expressed as (Ti_{1-x-y}LₓMo_{y})(C_{1-z}N_{z}), a second hard phase composed of WC, and a binder phase mainly composed of both or one of Co and Ni. JP H04 231467 A relates to a cermet comprising a hard phase comprising a carbonitride of Ti and Nb, and a metallic binder phase.

### CITATION LIST

### PATENT LITERATURE

PTL 1: WO2010/008004
PTL 2: WO2011/136197

### SUMMARY OF INVENTION

Cermet according to the present invention is defined in claim 1.

A cutting tool according to the present invention contains the cermet.

A method of manufacturing the cermet according to the present invention is defined in claim 7.

### BRIEF DESCRIPTION OF DRAWINGS

Fig. 1 is a schematic diagram schematically showing a cross-section of cermet according to the present embodiment.
Fig. 2 shows one example of an electromicrograph obtained by shooting a cross-section of cermet in a sample 11.

### DETAILED DESCRIPTION

### [Problem to be Solved by the Present Disclosure]

In the sintered hard alloy in PTL 1, the composite carbonitride solid solution contained in the hard phase is expressed as (Ti₁₋ₓMₓ)(C_{1-y}N_{y}). M in the composite carbonitride solid solution represents at least one element selected from the group consisting of W, Mo, Nb, Zr, and Ta, x is not smaller than 0.05 and not greater than 0.5, and y is not smaller than 0.01 and not greater than 0.75. Since such a sintered hard alloy is insufficient in binding force at an interface between the hard phase and the binder phase, it is difficult to achieve both of wear resistance and chipping resistance.

In cermet in PTL 2, the composite carbonitride solid solution in the first hard phase is expressed as (Ti_{1-x-y}LₓMo_{y})(C_{1-z}N_{z}). In this chemical formula, L represents at least one element selected from the group consisting of Zr, Hf, Nb, and Ta, x is not smaller than 0.01 and not greater than 0.5, y is not smaller than 0.03 and not greater than 0.05, and z is not smaller than 0.05 and not greater than 0.75. Since Mo lowers resistance of carbonitride itself against adhesion to steel, a content thereof is preferably low. The composite carbonitride solid solution in cermet in PTL 2 is not low in content of Mo, because an atomic ratio of Mo occupied in all metal elements (Ti, L, and Mo) is not lower than 0.03. Cermet is lowered in resistance against adhesion to steel by containing the second hard phase composed of WC, which consequently greatly affects chipping resistance representing cutting performance of cermet.

Under the circumstances, an object of the present invention is to provide cermet which achieves both of wear resistance and chipping resistance in a balanced manner, a cutting tool containing the same, and a method of manufacturing cermet.

### [Effect of the Present Invention]

According to the above, cermet which achieves both of wear resistance and chipping resistance in a balanced manner, a cutting tool containing the same, and a method of manufacturing cermet can be provided.

### [Description of Embodiment of the Invention of the Present Application]

The present inventors have developed cermet in which composite carbonitride expressed as Ti_{1-X-Y}Nb_{X}W_{Y}C_{1-Z}N_{Z} is applied as a new source material. The present inventors have found that the composite carbonitride expressed as Ti_{1-X-Y}Nb_{X}W_{Y}C_{1-Z}N_{Z} is better in thermal characteristics than a conventional Ti-based compound. In particular, the present inventors have found that high mechanical strength is obtained by appropriately controlling a composition of Nb, W, and N. Furthermore, the present inventors have also found that a hard phase containing the composite carbonitride is structured to include a core portion containing the composite carbonitride expressed as Ti_{1-X-Y}Nb_{X}W_{Y}C_{1-Z}N_{Z} and a peripheral portion composed to be higher in content of W than the core portion so that binding force at an interface between the hard phase and a metallic binder phase is improved, and derived the present disclosure.

Embodiments of the present invention are initially described.

Cermet according to the present invention is according to claim 1. Cermet which achieves both of wear resistance and chipping resistance in a balanced manner can thus be provided.

X is not smaller than 0.1 and not greater than 0.6. Noticeable wear resistance and chipping resistance can thus be obtained.

X is preferably not smaller than 0.1 and not greater than 0.2. Noticeable wear resistance can thus be obtained.

X is also further preferably not smaller than 0.4 and not greater than 0.6. Noticeable chipping resistance can thus be obtained.

Preferably, the cermet contains a WC phase composed of WC and a content of the WC phase is not higher than 1 volume %. Since lowering in resistance against adhesion to steel can thus be prevented even though the WC phase is contained, both of wear resistance and chipping resistance can be achieved in a more balanced manner.

The cermet preferably contains no WC phase composed of WC. Since lowering in resistance against adhesion to steel can thus be prevented, wear resistance and chipping resistance can be achieved in a more balanced manner.

In the core portion, a total amount of V, Cr, and Mo occupied in a total amount of Ti, Nb, W, V, Cr, and Mo is smaller than 2 atomic %. Since V, Cr, and Mo representing elements which lower resistance of cermet against adhesion to steel can thus sufficiently be suppressed, wear resistance and chipping resistance can be achieved in a more balanced manner.

The core portion has an average crystal grain size not smaller than 0.5 µm and not greater than 3 µm. Higher wear resistance and chipping resistance can thus be obtained.

A cutting tool according to the present invention is according to claim 5. A cutting tool having excellent wear resistance and chipping resistance attributed to cermet can thus be provided.

The cutting tool preferably includes a substrate composed of the cermet and a coating film which covers the substrate. Such a cutting tool can also have excellent wear resistance and chipping resistance attributed to cermet.

A method of manufacturing cermet according to the present invention is according to claim 7. Cermet which achieves both of wear resistance and chipping resistance in a balanced manner can thus be manufactured.

### [Details of Embodiment of the Invention of the Present Application]

Though an embodiment of the present invention (hereinafter also denoted as the "present embodiment") will further be described hereinafter in detail, the present embodiment is not limited thereto. The description will be given below with reference to drawings.

An expression in a format "A to B" herein means the upper limit and the lower limit of a range (that is, not smaller than A and not greater than B). When a unit is not given for A but a unit is given only for B, A and B are common in unit. When a compound is herein expressed with a chemical formula and when an atomic ratio is not particularly limited, all atomic ratios that have conventionally been known are encompassed and the atomic ratio should not necessarily be limited only to those in a stoichiometric range. For example, when an expression "TiAlN" is given, a ratio among atoms which form TiAlN is not limited to Ti:Al:N = 0.5:0.5:1 but all atomic ratios that have conventionally been known are encompassed. This is also applicable to an expression of a compound other than "TiAlN." In the present embodiment, a compound shown to contain a metal element such as titanium (Ti), aluminum (Al), silicon (Si), tantalum (Ta), chromium (Cr), niobium (Nb), or tungsten (W) and a non-metal element such as nitrogen (N), oxygen (O), or carbon (C) does not necessarily have to have a stoichiometric composition. When carbonitride and composite carbonitride described herein are expressed as α_{X}β_{Y}γ_{Z}C_{S}N_{T} (metal αβγ and non-metal CN), they can be varied, for example, within a range of 0.6 ≤ S+T ≤ 1.0 when a condition of X+Y+Z= 1 is satisfied. "Mechanical strength" herein means mechanical strength including various characteristics such as wear resistance, chipping resistance, and bending strength.

### <<Cermet>>

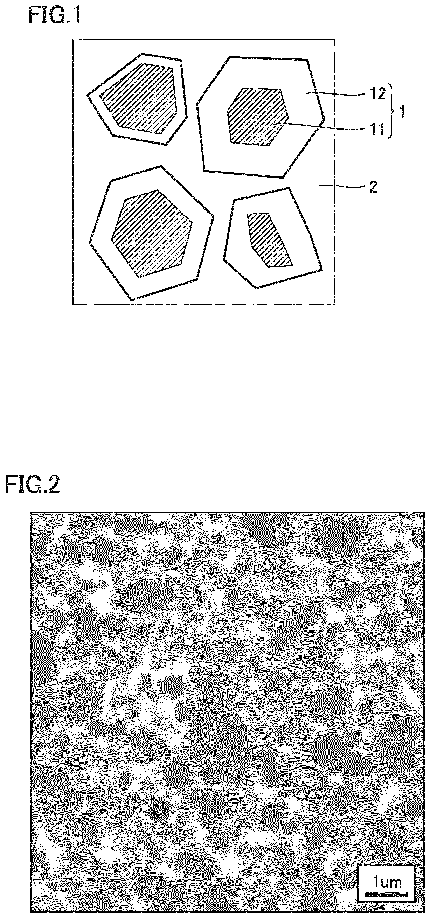

Cermet according to the present embodiment contains a hard phase 1 containing carbonitride containing Ti and Nb and a metallic binder phase 2 containing an iron-group element as shown in Fig. 1. Hard phase 1 includes a granular core portion 11 and a peripheral portion 12 which covers at least a part of core portion 11. Core portion 11 contains composite carbonitride expressed as Ti_{1-X-Y}Nb_{X}W_{Y}C_{1-Z}N_{Z}, where Y is not smaller than 0 and not greater than 0.05 and Z is not smaller than 0.3 and not greater than 0.6. Peripheral portion 12 is composed to be higher in content of W than core portion 11. Cermet with such characteristics can achieve both of wear resistance and chipping resistance in a balanced manner.

### <Hard phase>

Hard phase 1 contains carbonitride containing Ti and Nb as described above. In particular, hard phase 1 includes granular core portion 11 and peripheral portion 12 which covers at least a part of core portion 11. Core portion 11 contains composite carbonitride expressed as Ti_{1-X-Y}Nb_{X}W_{Y}C_{1-Z}N_{Z} where Y is not smaller than 0 and not greater than 0.05 and Z is not smaller than 0.3 and not greater than 0.6. Peripheral portion 12 is composed to be higher in content of W than core portion 11. When granular core portion 11 in hard phase 1 has a composition (Ti_{1-X-Y}Nb_{X}W_{Y}C_{1-Z}N_{Z}) at an atomic ratio within the range described above, cermet can be high in mechanical strength. As hard phase 1 includes core portion 11 and peripheral portion 12 which covers at least a part of core portion 11, adhesion strength between hard phase 1 and metallic binder phase 2 can be enhanced. Core portion 11 and peripheral portion 12 in hard phase 1 are preferably in double-structure relation (what is called a core-shell structure) in which core portion 11 is partially or entirely covered with peripheral portion 12 as shown in Fig. 1.

### (Core Portion)

Core portion 11 contains composite carbonitride expressed as Ti_{1-X-Y}Nb_{X}W_{Y}C_{1-Z}N_{Z}. X being 0.1 or more or 0.6 or less, Y is not smaller than 0 and not greater than 0.05, and Z is not smaller than 0.3 and not greater than 0.6. Core portion 11 is mainly composed of Ti and contains Nb as a sub component. The core portion may further contain W as a third component. When values of X and Y are within the range described above, cermet can achieve both of wear resistance and chipping resistance in a balanced manner. An atomic ratio X of Nb is preferably not lower than 0.1 and not higher than 0.2, and most preferably not lower than 0.13 and not higher than 0.17. X is also preferably not smaller than 0.4 and not greater than 0.6. An atomic ratio Y of W is preferably not lower than 0 and not higher than 0.03. An atomic ratio (1-X-Y) of Ti is preferably not lower than 0.75 and not higher than 0.9 from a point of view of setting an amount of addition of the sub component and the third component to at most a solid solubility limit and sufficiently exhibiting an effect of an added metal element. Z which represents an atomic ratio of carbon and nitrogen in the composite carbonitride is preferably not lower than 0.4 and not higher than 0.6. Though a composition of core portion 11 should not particularly be limited so long as the effect of the present invention is exhibited and the core portion is composed to be lower in content of W than peripheral portion 12, exemplary compositions include Ti_{0.9}Nb_{0.1}C_{0.5}N_{0.5}, Ti_{0.8}Nb_{0.15}W_{0.05}C_{0.4}N_{0.6}, and Ti_{0.75}Nb_{0.2}W_{0.05}C_{0.6}N_{0.4}.

In core portion 11, a total amount of V, Cr, and Mo occupied in a total amount of Ti, Nb, W, V, Cr, and Mo is lower than 2 atomic %. The total content of V, Cr, and Mo occupied in the total amount of Ti, Nb, W, V, Cr, and Mo in core portion 11 is preferably not higher than 1 atomic %. The content is more preferably 0.

Core portion 11 may contain an element such as V, Cr, and Mo described above as an impurity or a trace element in addition to Ti which is a main component, Nb which is a sub component, and W which is a third component. In the present embodiment, a total content of V, Cr, and Mo among the elements above is lower than 2 atomic % with respect to all of these metal elements. Since V, Cr, and Mo representing elements which lower resistance of cermet against adhesion to steel can thus sufficiently be suppressed, both of wear resistance and chipping resistance can be achieved in a more balanced manner. When the content is not lower than 2 atomic %, these impurities may lower resistance of cermet against adhesion to steel.

A composition and an atomic ratio of the composite carbonitride contained in core portion 11 can be identified by analyzing a cut plane obtained by cutting cermet along an arbitrary plane with an energy dispersive X-ray spectroscope (EDX) attached to a scanning electron microscope (SEM). A composition and an atomic ratio of the composite carbonitride (Ti_{1-X-Y}Nb_{X}W_{Y}C_{1-Z}N_{Z}) in core portion 11 can be found, for example, by preparing a cut plane of one piece of cermet and subjecting core portion 11 included in hard phase 1 which appears in the cut plane to measurement with the apparatus. Similarly, a content (a contained amount) of WC which will be described later in cermet, a composition and an atomic ratio of the composite carbonitride in peripheral portion 12, and a content of an iron-group element in metallic binder phase 2 can also be identified by the same measurement method by subjecting the WC phase, peripheral portion 12, or metallic binder phase 2 which appears in the cut plane to measurement. A surface of the cut plane is preferably polished with focused ion beam (FIB) before observation with the SEM.

Core portion 11 has an average crystal grain size (that is, a grain size at 50% in a number-based cumulative distribution (which is also denoted as "D50 of the core portion" below)) not smaller than 0.5 µm and not greater than 3 µm. Namely, a plurality of granular core portions 11 which appear in the cut plane have D50 not smaller than 0.5 µm and not greater than 3 µm. Since particularly bending strength and toughness among mechanical strengths can thus be improved, higher wear resistance and chipping resistance can be obtained. Core portion 11 has D50 preferably not smaller than 1 µm and not greater than 2 µm.

A grain size of each core portion 11 can be found by subjecting an SEM image of a cross-section (a cut plane) of cermet to image analysis. For example, ImageJ (https://imagej.nih.gov/ij/) can be used as software to be used for image analysis. The "grain size" of core portion 11 means a maximum Feret diameter. A population parameter for finding D50 of core portion 11 (that is, the number of "grain sizes" of core portions 11) is set to at least 50 and preferably to at least 100. An SEM image for image analysis is to be picked up at a magnification of 3000 to 5000x from a point of view of accuracy in analysis, and grain sizes of core portions 11 in number satisfying the population parameter are preferably prepared by setting a plurality of fields of view.

A volume ratio of core portion 11 occupied in cermet is preferably not lower than 5 volume % and not higher than 60 volume %. Higher wear resistance and chipping resistance can thus be obtained. A volume ratio of core portion 11 occupied in cermet is more preferably not lower than 10 volume % and not higher than 50 volume %.

A volume ratio of core portion 11 occupied in cermet can be found as in analysis of D50 of core portion 11. More specifically, an area ratio of core portion 11 in an observation field of view can be found by preparing the cut plane described above, observing the cut plane with the SEM at a magnification from 3000 to 5000x, and analyzing an image with the software described above. Then, the area ratio is defined as a volume ratio of core portion 11 occupied in cermet by regarding the area ratio as continuing also in a direction of depth of the cut plane. A volume ratio of core portion 11 occupied in cermet can thus be found. An average value of area ratios calculated based on analysis of an image described above prepared by picking up an SEM image of one cut plane in at least three fields of view is preferably defined as a volume ratio of core portion 11 occupied in cermet.

### (Peripheral Portion)

Hard phase 1 includes peripheral portion 12 which covers at least a part of core portion 11 as described above. In particular, core portion 11 and peripheral portion 12 in hard phase 1 are preferably in double structure relation (what is called a core-shell structure) in which core portion 11 is partially or entirely covered with peripheral portion 12.

Peripheral portion 12 is formed in a step of sintering cermet (a fourth step) which will be described later. Peripheral portion 12 is formed around core portion 11 as a result of formation of a solid solution and re-precipitation of particles of composite carbonitride (Ti_{1-X-Y}Nb_{X}W_{Y}C_{1-Z}N_{Z}) and particles therearound containing W (for example, WC particles) employed as source materials in liquid phase sintering. In this case, peripheral portion 12 is precipitated as composite carbonitride which is composed to be higher in content of W than the composite carbonitride (that is, Ti_{1-X-Y}Nb_{X}W_{Y}C_{1-Z}N_{Z}) contained in core portion 11. Values of X and Z in the composite carbonitride in core portion 11 and the composite carbonitride in peripheral portion 12 are varied depending on a value of Y which increases in the composite carbonitride in peripheral portion 12 as a result of formation of a solid solution and re-precipitation of particles containing W (for example, WC particles) and an atmosphere during sintering (in particular, a partial pressure of nitrogen in the atmosphere).

Peripheral portion 12 functions as an adhesive layer which enhances adhesion strength between hard phase 1 and metallic binder phase 2. Mechanical characteristics of cermet can thus be improved. Peripheral portion 12 may partially or entirely cover core portion 11 so long as the effect of the present invention is exhibited, and a thickness thereof should not be limited. A composition of peripheral portion 12 should not particularly be limited so long as the effect of the present invention is exhibited and the peripheral portion is composed to be higher in content of W than core portion 11. Exemplary compositions of peripheral portion 12 can include Ti_{0.8}Nb_{0.1}W_{0.1}C_{0.5}N_{0.5}, Ti_{0.75}Nb_{0.15}W_{0.1}C_{0.4}N_{0.6}, and Ti_{0.7}Nb_{0.15}W_{0.15}C_{0.6}N_{0.4}.

### <Metallic Binder Phase>

Metallic binder phase 2 contains an iron-group element. Metallic binder phase 2 is mainly composed of an iron-group element. Metallic binder phase 2 can contain, in addition to the iron-group element, an inevitable element introduced from hard phase 1 and a trace amount of an impurity element. From a point of view of maintaining a state as a metal and avoiding formation of a brittle intermediate compound, a content of the iron-group element in metallic binder phase 2 is preferably not lower than 90 atomic % and more preferably not lower than 95 atomic %. The upper limit of the content of the iron-group element in metallic binder phase 2 is 100 atomic %. The iron-group element refers to group 8, group 9, and group 10 elements in the fourth period in the periodic table, that is, iron (Fe), cobalt (Co), and nickel (Ni). Examples of elements other than the iron-group element contained in metallic binder phase 2 include titanium and niobium.

Metallic binder phase 2 in cermet is mainly composed preferably of Co. A content of the iron-group element except for Co in metallic binder phase 2 is preferably lower than 75 volume % and more preferably lower than 50 volume %.

### <WC Phase>

Cermet according to the present embodiment preferably contains no WC phase composed of WC. When a work material is composed of a material based on iron and steel, with appearance of the WC phase as a result of excessive precipitation of WC in cermet, wear resistance and chipping resistance of cermet tend to lower due to adhesiveness of WC to the work material. When WC should be contained in order to design cermet high in toughness, however, a content of the WC phase in cermet is not higher than 1 volume %. Namely, cermet contains the WC phase composed of WC and a content of the WC phase is not higher than 1 volume %. When the content of the WC phase in cermet exceeds 1 volume %, resistance against adhesion to steel lowers and it tends to be difficult to achieve both of wear resistance and chipping resistance in a balanced manner.

A content (volume %) of the WC phase in cermet can be found with a method the same as the method of calculating a volume ratio of core portion 11 occupied in cermet described above. WC is observed as particles having high brilliance (white color) in a field of view of observation with an SEM (a backscattered electron image). Absence of the WC phase composed of WC in cermet can be confirmed based on a diffraction peak of WC located at a background level in analysis with X-ray diffraction (XRD) of cermet.

### [Method of Manufacturing Cermet]

Though a method of manufacturing cermet according to the present embodiment should not particularly be restricted, a method below is preferred. The method of manufacturing cermet includes obtaining first powders composed of composite carbonitride expressed as Ti_{1-X-Y}Nb_{X}W_{Y}C_{1-Z}N_{Z} (a first step), obtaining mixed powders by mixing the first powders, second powders containing W, and third powders containing an iron-group element (a second step), obtaining a formed material by pressing the mixed powders (a third step), and obtaining a sintered material by sintering the formed material (a fourth step). In Ti_{1-X-Y}Nb_{X}W_{Y}C_{1-Z}N_{Z}, X is 0.1 or more and 0.6 or less, Y is not smaller than 0 and not greater than 0.05 and Z is not smaller than 0.3 and not greater than 0.6.

### <First Step>

The first step is a step of obtaining first powders composed of composite carbonitride expressed as Ti_{1-X-Y}Nb_{X}W_{Y}C_{1-Z}N_{Z}.

The step of obtaining first powders includes operations of obtaining mixed oxide powders by mixing oxide powders containing two elements of Ti and Nb or three elements of Ti, Nb, and W and carbon source powders containing carbon (a first operation), obtaining a granulated material by granulating the mixed oxide powders (a second operation), obtaining a powder precursor composed of the composite carbonitride by subjecting the granulated material to heat treatment at a temperature not lower than 1800°C in an atmosphere containing nitrogen gas (a third operation), and obtaining the first powders by breaking the powder precursor (a fourth operation).

### (First Operation)

In the first operation, mixed oxide powders are obtained by mixing oxide powders containing two elements of Ti and Nb or three elements of Ti, Nb, and W and carbon source powders containing carbon.

The oxide powders are composed of oxide containing two elements of Ti and Nb or three elements of Ti, Nb, and W as described above. In this case, first powders having a small primary particle size can easily be obtained, and hence D50 of the core portion can be made smaller, for example, to at most 3 µm. The oxide powders may contain at least one element selected from the group consisting of V, Cr, and Mo as a component introduced from facilities used for manufacturing. In this case, in the oxide powders, a total content of V, Cr, and Mo is preferably lower than 2 atomic % with respect to a total amount of Ti, Nb, W, V, Cr, and Mo. Specific examples of the oxide powders include mixed powders containing powders of oxide such as TiO₂, Nb₂O₅, and WO₃. The oxide powders may be composed of composite oxide such as Ti_{0.9}Nb_{0.1}O₂ or Ti_{0.9}Nb_{0.05}W_{0.05}O₂. An oxidation number of each element or a content of an impurity can be modified unless it is contrary to the object.

Carbon source powders contain at least carbon. The carbon source powders preferably contain graphite and more preferably consist of graphite. In the first operation, mixed oxide powders are obtained by mixing the carbon source powders and the oxide powders. Thus, in the third operation which will be described later, a reduction reaction of the oxide, a solid solution formation reaction as a result of mutual diffusion of Ti and Nb in the reduced oxide, and a carbonitriding reaction of Ti and Nb in a state of a solid solution can simultaneously and continuously proceed in an atmosphere containing nitrogen gas. When the oxide powders contain W, a reduction reaction of the oxide, a solid solution formation reaction as a result of mutual diffusion of Ti, Nb, and W, and a carbonitriding reaction of Ti, Nb, and W in a state of a solid solution can simultaneously and continuously proceed in an atmosphere containing nitrogen gas in the third operation. First powders can thus efficiently be obtained.

A conventionally known method can be employed for a method of mixing oxide powders and carbon source powders. From a point of view of decrease in particle size at 50% in a number-based cumulative distribution of the mixed oxide powders (which is also denoted as "D50 of mixed oxide powders" below), a mixing method with the use of a dry ball mill and a mixing method with the use of a wet ball mill high in crushing function can suitably be employed. A mixing method with the use of a rotary blade fluid mixer low in crushing function can also be applied. D50 of mixed oxide powders can be found based on at least 100 particles which appear in a micrograph observed at a magnification of 10000x with an SEM. A diameter of a circle equal in area to a particle (an equivalent circular diameter) of all particles which appear in the micrograph is calculated with the use of image analysis software (for example, ImageJ), and an equivalent circular diameter of a particle at 50% in a number-based cumulative distribution is defined as D50 of mixed oxide powders.

### (Second Operation)

In the second operation, a granulated material is obtained by granulating the mixed oxide powders. A conventionally known granulation method can be employed as the granulation method in the second operation. Examples of the granulation method include a method with the use of an already known apparatus such as a spray dryer and an extrusion granulator. For granulation, for example, a binder component such as a wax material can be employed as appropriate as a binder. A shape and a dimension of a granulated material should not particularly be limited. A granulated material can be, for example, in a columnar shape having a diameter from 0.5 to 5 mm and a length from 5 to 20 mm.

### (Third Operation)

In the third operation, a powder precursor composed of the composite carbonitride is obtained by subjecting the granulated material to heat treatment at a temperature not lower than 1800°C in an atmosphere containing nitrogen gas. In the third operation, in an atmosphere containing nitrogen gas, oxygen in the oxide in the oxide powders contained in the granulated material reacts with carbon in the carbon source powders, so that Ti and Nb in the oxide powders are reduced. A solid solution formation reaction of reduced Ti and Nb proceeds as a result of mutual diffusion. A carbonitriding reaction of reduced Ti and Nb with nitrogen in the atmosphere and carbon in the carbon source powders also simultaneously occurs. The powder precursor composed of the composite carbonitride expressed as Ti_{1-X-Y}Nb_{X}W_{Y}C_{1-Z}N_{Z} described above is thus formed. The nitrogen gas contained in the atmosphere serves as a source of N for the composite carbonitride.

In the third operation, when mixed powders are obtained by mixing metal powders containing Ti and Nb, metal powders containing Ti, Nb, and W, carbonitride powders containing Ti and Nb, or carbonitride powders containing Ti, Nb, and W instead of oxide powders with carbon source powders and subjected to heat treatment, a powder precursor composed of the composite carbonitride cannot be obtained. This is because a carbonitriding reaction of metal powders containing Ti, Nb, and the like proceeds early in heat treatment and hence a solid solution formation reaction owing to mutual diffusion of Ti, Nb, and the like does not proceed. Since carbonitride powders containing Ti, Nb, and the like are chemically stable even in a high-temperature region exceeding 2000°C, a solid solution formation reaction owing to mutual diffusion of Ti, Nb, and the like does not proceed.

An atmosphere in heat treatment in the third operation should not particularly be limited so long as it is an atmosphere containing nitrogen gas. Pure N₂ gas or a gas mixture obtained by mixing hydrogen gas (H₂ gas), argon gas (Ar gas), helium gas (He gas), or carbon monoxide gas (CO gas) into N₂ gas may be employed as the atmosphere.

From a point of view of progress and acceleration of a reduction reaction, a solid solution formation reaction, and a carbonitriding reaction of oxide powders, a temperature during heat treatment in the third operation is preferably not lower than 1800°C and more preferably not lower than 2000°C. From a point of view of prevention of excessive aggregation of a powder precursor obtained by heat treatment, the temperature is preferably not higher than 2400°C.

A time period for heat treatment in the third operation is preferably adjusted depending on D50 of oxide powders. For example, when mixed oxide powders have D50 from 0.3 to 0.5 µm, a time period for heat treatment described above is suitably from 15 to 60 minutes. As a value of D50 is smaller, a time period for heat treatment in the third operation is preferably shorter. As a value of D50 is larger, a time period for heat treatment in the third operation is preferably longer.

In the third operation, a rotary continuous heat treatment apparatus such as a rotary kiln is preferably employed. This heat treatment apparatus includes an inclined rotary reaction tube. The heat treatment apparatus also further includes a heating mechanism which heats the rotary reaction tube, a gas introduction port for introducing gas containing nitrogen into the rotary reaction tube, a gas exhaust port for exhausting the gas containing nitrogen from the rotary reaction tube, an inlet for introducing a granulated material into the rotary reaction tube, and an outlet for taking out a powder precursor from the rotary reaction tube. Such a heat treatment apparatus is preferred because it can perform heat treatment of a granulated material under a constant condition and hence it can continuously and efficiently manufacture a powder precursor of composite carbonitride stable in quality.

In using the heat treatment apparatus in the third operation, initially, the rotary reaction tube is heated to a temperature not lower than 1800°C by using the heating mechanism, and the inside of the rotary reaction tube is set to a nitrogen atmosphere by introducing gas containing nitrogen gas through the gas introduction port. The granulated material is subjected to heat treatment by continuously supplying the granulated material through the inlet in an upper portion of the rotary reaction tube, rotating the rotary reaction tube, and moving the granulated material through the inside of the rotary reaction tube. A powder precursor composed of the composite carbonitride can thus be formed. The powder precursor can be taken out through the outlet in a lower portion of the rotary reaction tube.

### (Fourth Operation)

In the fourth operation, first powders are obtained by breaking the powder precursor. A conventionally known breaking method can be used as a method of breaking the powder precursor in the fourth operation.

### <Second Step>

The second step is a step of obtaining mixed powders by mixing the first powders, second powders containing W, and third powders containing an iron-group element. A conventionally known mixing method can be employed as a method of mixing these powders. Examples of the method include a mixing method with the use of a dry ball mill and a mixing method with the use of a wet ball mill high in crushing function as well as a mixing method with the use of a rotary blade fluid mixer low in crushing function when powders are weakly aggregated. Commercially available WC powders can be employed as second powders containing W, and commercially available Co powders can be employed as third powders containing an iron-group element.

### <Third Step>

The third step is a step of obtaining a formed material by pressing the mixed powders described above. A conventionally known pressing method can be employed as a method of pressing the mixed powders. Examples of the method include pressing by filling a mold with mixed powders and applying a pressure with the use of a pestle, cold isostatic pressing, injection molding, and extrusion molding. A pressure at the time of pressing is preferably not lower than 0.5 t/cm² (approximately 50 MPa) and not higher than 2.0 t/cm² (approximately 200 MPa).

### <Fourth Step>

The fourth step is a step of obtaining a sintered material by sintering the formed material described above. In a method of sintering the formed material, the formed material is preferably held for a prescribed period of time in a temperature region where a liquid phase appears. A sintering temperature is preferably not lower than 1300°C and not higher than 1600°C. A sintering temperature is more preferably not lower than 1300°C and not higher than 1500°C. A time period for holding the formed material is preferably not shorter than 0.5 hour and not longer than 2 hours and more preferably not shorter than 1 hour and not longer than 1.5 hour. An atmosphere during sintering is preferably an atmosphere of inert gas such as nitrogen or argon or vacuum (approximately 0.5 Pa or lower).

After obtaining a sintered material as such, cermet as a final product can be obtained by machining the sintered material as necessary. Cermet obtained by such a manufacturing method can achieve both of wear resistance and chipping resistance in a balanced manner. The sintered material obtained by the manufacturing method does not necessarily require machining such as surface polishing, and it can be provided as a final product (cermet) with its sintered skin being maintained.

A composition and an atomic ratio of the first powders can be found by a conventionally known component analysis technique. For example, a composition (a metal, carbon, and nitrogen) and a content in the powders can be identified by inductive plasma emission spectroscopy, high-frequency combustion, or a thermal conductivity technique.

From a point of view of handleability and achievement of both of high hardness and high toughness in application as a cutting tool, a particle size at 50% in a number-based cumulative distribution of the first powders (which is also denoted as D50 of the first powders below) is preferably not smaller than 0.3 µm and not greater than 1.5 µm. A method of measuring D50 of the first powders may be the same as or different from the method of measuring D50 of the core portion. D50 of the first powders can be measured with the use of an SEM similarly to D50 of the core portion. D50 can be measured with an index of refraction of particles being set to 2.4, for example, with the use of a laser diffraction particle size distribution measurement instrument (a trademark "Microtrac^{®} MT3000II" manufactured by MicrotracBEL Corp.). D50 of the first powders means D50 of primary particles of the composite carbonitride.

### [Cutting Tool]

A cutting tool according to the present embodiment contains cermet. The cutting tool which achieves both of wear resistance and chipping resistance in a balanced manner can thus be provided. The cutting tool can suitably be used as a drill, an end mill, a throwaway tip for drilling, a throwaway tip for end milling, a throwaway tip for milling, a throwaway tip for turning, a metal saw, a gear cutting tool, a reamer, a tap, a cutting bite, a wear resistant tool, or a tool for friction stir welding.

When the cutting tool is implemented as a throwaway chip, a substrate may or may not have a chip breaker. A cutting edge ridgeline portion which serves as a central portion of cutting in cutting of a work material may have a sharp edge (a ridge at which a rake face and a flank intersect with each other), may be honed (a sharp edge provided with R), may have a negative land (beveled), and may be honed and have a negative land.

The cutting tool according to the present embodiment includes a substrate composed of cermet and a coating film which covers the substrate. Since such a cutting tool further includes the coating film, it achieves improved resistance against adhesion in addition to wear resistance. The coating film may cover the entire surface or a part of the substrate (for example, a cutting edge ridgeline portion which is a region highly contributing to cutting performance). A composition of the coating film should not particularly be limited, and any conventionally known coating film can be adopted.

A conventionally known method can be employed as a method of covering a substrate composed of cermet with a coating film. For example, physical vapor deposition (PVD) or chemical vapor deposition (CVD) can be employed. In particular, examples of PVD include resistive thermal evaporation, electron beam (EB) evaporation, molecular beam epitaxy (MBE), ion plating, ion beam deposition, and sputtering.

### Examples

Though the present invention will be described hereinafter in further detail with reference to Examples, the present invention is not limited thereto.

### «Example 1»

### <Fabrication of Cermet in Samples 1 to 9 and Samples A to B>

### (First Step)

Commercially available TiO₂ powders (having a size of approximately 0.5 µm and manufactured by Kojundo Chemical Lab. Co., Ltd.) and commercially available Nb₂O₅ powders (having a size of approximately 1 µm and manufactured by Kojundo Chemical Lab. Co., Ltd.) were prepared as oxide powders. Commercially available graphite powders (having a size of approximately 5 µm and manufactured by Kojundo Chemical Lab. Co., Ltd.) were prepared as carbon source powders. Mixed oxide powders corresponding to samples 1 to 9 and samples A to B were obtained by mixing the powders at such blending ratios as achieving chemical compositions of composite carbonitride shown in samples 1 to 9 and chemical compositions of carbonitride shown in samples A and B in Table 1 (first operation). Mixing was performed by a ball mill method.

Then, a granulated material in a columnar shape having an average diameter of approximately 2.4 mm and an average length of approximately 10 mm was obtained by granulating the mixed oxide powders with an extruder (an extrusion hole diameter φ being set to 2.5 mm) (second operation). An average diameter and an average length of the granulated material were measured with a micrometer.

A powder precursor composed of the composite carbonitride or the carbonitride was obtained by subjecting the granulated material to heat treatment at 1800°C in a nitrogen atmosphere by using the rotary kiln described above (third operation). Approximately thirty minutes were required for the granulated material to pass through a heating section in the rotary kiln.

Finally, the powder precursor was broken in a dry state with the use of a known breaker (a tumbling ball mill with the use of a superhard ball of φ 4.5 mm as a crushing medium) (fourth operation). Powders of the composite carbonitride in samples 1 to 9 (first powders) and powders of the carbonitride in samples A and B having chemical compositions shown in Table 1 were thus obtained.

### (Second Step)

Mixed powders were obtained by mixing 80 volume % of the first powders described above, 5 volume % of commercially available WC powders as second powders (a trademark "WC-25" manufactured by Japan New Metals Co., Ltd.), and 15 volume % of commercially available Co powders as third powders (having a size of approximately 5 µm and manufactured by Kojundo Chemical Lab. Co., Ltd.). Mixing was performed by a ball mill method for 48 hours.

### (Third Step)

A formed material was obtained by granulating the mixed powders with the use of camphor and ethanol and press-forming the granulated material by using a prescribed mold (a pressure = 1.0 t/cm² (approximately 100 MPa)).

### (Fourth Step)

A sintered material was obtained by loading the formed material in a sintering furnace and sintering the formed material in a nitrogen atmosphere at a reduced pressure (0.1 kPa) under such conditions as a sintering temperature of 1500°C and a holding time period of one hour, and the sintered material was adopted as cermet in each of samples 1 to 9 and samples A to B.

A composition of the hard phase of cermet was analyzed with EDX attached to an SEM with the method described above. It was consequently confirmed that the core portion of the hard phase in cermet contained the composite carbonitride having a chemical composition shown in each of samples 1 to 9 and samples A to B in Table 1. It was further confirmed that the hard phase included the peripheral portion having a composition higher in content of W than a composition of the composite carbonitride in the core portion and the peripheral portion covered at least a part of the core portion. Table 1 also shows a composition of the peripheral portion in cermet in each of samples 1 to 9 and samples A to B.

### <Fabrication of Cutting Tools in Samples 1 to 9 and Samples A to B>

Cermet was shaped into a tool shape of CNGN120408 by such machining as grinding away a sintered skin representing the surface of cermet with a diamond wheel at number #400 (the number (#) representing smoothness, the larger number representing higher smoothness). Cutting tools in samples 1 to 9 and samples A to B were fabricated by subjecting cermet shaped into the tool shape to cutting edge treatment. These cutting tools were subjected to a cutting test below.

### <Cutting Test>

The cutting tools in samples 1 to 9 and samples A to B were subjected to a wear resistance test and a chipping resistance test under conditions below. Table 1 shows results. Good results are expected in both of the wear resistance test and the chipping resistance test when the composite carbonitride contained in the core portion of the cutting tool (cermet) had a prescribed composition.

### (Wear Resistance Test)

Work material: SCM435
Peripheral speed: 230 m/min.
Feed: 0.15 mm/rev.
Depth of cut: 1.0 mm
Cutting fluid: Used

In the wear resistance test, a cutting time period (unit of minute) until a wear width of a flank of a cutting edge in each sample was equal to or greater than 0.15 mm was determined as a lifetime. As this time period is longer, wear resistance is evaluated as higher.

### (Chipping Resistance Test)

Work material: SCM435 with a slot groove
Peripheral speed: 300 m/min.
Feed: 0.3 mm/rev.
Depth of cut: 1.5 mm
Cutting fluid: Used

In the chipping resistance test, the number of times of collision of the cutting edge with a slot groove until the cutting edge in each sample was chipped was evaluated. As the number is larger, chipping resistance is evaluated as higher.

**Table 1**

| | Chemical Composition of Composite Carbonitride (Ti_{1-X-Y}Nb_{X}W_{Y}C_{1-Z}N_{Z}) and Carbonitride (TiCN, NbCN) | | | Composition of Peripheral Portion | Result of Cutting Test | |
|---|---|---|---|---|---|---|
| | X (Nb) | Y (W) | Z (N) | | Wear Resistance (Minute) | Chipping Resistance (Times) |
| Sample 1 | 0.1 | 0 | 0.5 | Ti_{0.82}Nb_{0.09}W_{0.09}C_{0.54}N_{0.46} | 38.2 | 1873 |
| Sample 2 | 0.2 | 0 | 0.5 | Ti_{0.73}Nb_{0.18}W_{0.09}C_{0.54}N_{0.46} | 48.4 | 2370 |
| Sample 3 | 0.3 | 0 | 0.5 | Ti_{0.64}Nb_{0.27}W_{0.09}C_{0.54}N_{0.46} | 28.6 | 1768 |
| Sample 4 | 0.4 | 0 | 0.5 | Ti_{0.55}Nb_{0.36}W_{0.09}C_{0.54}N_{0.46} | 40.6 | 2735 |
| Sample 5 | 0.5 | 0 | 0.5 | Ti_{0.45}Nb_{0.46}W_{0.09}C_{0.55}N_{0.45} | 36 | 2602 |
| Sample 6 | 0.6 | 0 | 0.5 | Ti_{0.36}Nb_{0.55}W_{0.09}C_{0.55}N_{0.45} | 29.3 | 3236 |
| Sample 7 | 0.7 | 0 | 0.5 | Ti_{0.27}Nb_{0.64}W_{0.09}C_{0.55}N_{0.45} | 22.5 | 1318 |
| Sample 8 | 0.8 | 0 | 0.5 | Ti_{0.18}10_{0.73}W_{0.09}C_{0.55}N_{0.45} | 18 | 1559 |
| Sample 9 | 0.9 | 0 | 0.5 | Ti_{0.09}Nb_{0.82}W_{0.09}C_{0.55}N_{0.45} | 19.6 | 1711 |
| Sample A | 0 | 0 | 0.5 | Ti_{0.91}W_{0.09}C_{0.54}N_{0.46} | 21.7 | 1502 |
| Sample B | 1 | 0 | 0.5 | Nb_{0.91}W_{0.09}C_{0.55}N_{0.45} | 17.9 | 1588 |

### <Discussion>

According to Table 1, it can be seen that the cutting tools according to the Example (samples 1 to 9) achieve both of wear resistance and chipping resistance in a balanced manner as compared with the cutting tools according to a comparative example (samples A and B). Samples 7-9 are not covered by the claims, as X exceeds 0.6.

### «Example 2»

### <Fabrication of Cermet in Samples 11 to 19 and Samples 111 to 116>

### (First Step)

Commercially available TiO₂ powders (having a size of approximately 0.5 µm and manufactured by Kojundo Chemical Lab. Co., Ltd.), commercially available Nb₂O₅ powders (having a size of approximately 1 µm and manufactured by Kojundo Chemical Lab. Co., Ltd.), and commercially available WO₃ powders (having a purity of 3 N and manufactured by Kojundo Chemical Lab. Co., Ltd.) were prepared as oxide powders. Commercially available graphite powders (having a size of approximately 5 µm and manufactured by Kojundo Chemical Lab. Co., Ltd.) were prepared as carbon source powders. Mixed oxide powders corresponding to samples 11 to 19 and samples 111 to 116 were obtained by mixing the powders at such a blending ratio as achieving chemical compositions of composite carbonitride shown in samples 11 to 19 and samples 111 to 116 in Table 2 (first operation). Mixing was performed by a ball mill method.

Then, a granulated material in a columnar shape having an average diameter of approximately 2.4 mm and an average length of approximately 10 mm was obtained by granulating the mixed oxide powders with an extruder (an extrusion hole diameter φ being 2.5 mm) (second operation). An average diameter and an average length of the granulated material were measured with a micrometer.

A powder precursor composed of the composite carbonitride was obtained by subjecting the granulated material to heat treatment at 1800°C in a nitrogen atmosphere by using the rotary kiln described above (third operation). Approximately thirty minutes were required for the granulated material to pass through a heating section in the rotary kiln.

Finally, the powder precursor was broken in a dry state with the use of a known breaker (a tumbling ball mill with the use of a superhard ball of φ 4.5 mm as a crushing medium) (fourth operation). First powders in samples 11 to 19 and samples 111 to 116 containing the composite carbonitride having chemical compositions shown in Table 2 were thus obtained.

A composition of the composite carbonitride in the first powders was identified by the method described above. An amount of C and an amount of N in the composite carbonitride can be controlled by adjusting an amount of carbon source powders added together with oxide powders described above and a concentration of nitrogen in the nitrogen atmosphere for heat treatment.

### (Second Step)

Mixed powders were obtained by mixing 86 volume % of the first powders described above, 2 volume % of commercially available WC powders as second powders (a trademark "WC-25" manufactured by Japan New Metals Co., Ltd.), and 6 volume % of commercially available Co powders (having a size of approximately 5 µm and manufactured by Kojundo Chemical Lab. Co., Ltd.) and 6 volume % of commercially available Ni powders (having a size of approximately 0.4 µm and manufactured by Toho Titanium Co., Ltd.) as third powders. Mixing was performed by a wet ball mill method for 48 hours.

### (Third Step)

A formed material was obtained by granulating the mixed powders with the use of camphor and ethanol and press-forming the granulated material by using a prescribed mold (a pressure = 1.0 t/cm² (approximately 100 MPa)).

### (Fourth Step)

A sintered material was obtained by loading the formed material in a sintering furnace and sintering the formed material in a nitrogen atmosphere at a reduced pressure (0.1 kPa) under such conditions as a sintering temperature of 1500°C and a holding time period of one hour, and the sintered material was adopted as cermet in each of samples 11 to 19 and samples 111 to 116.

A composition of the hard phase of cermet was analyzed with EDX attached to an SEM with the method described above. It was consequently confirmed that the core portion of the hard phase in cermet contained the composite carbonitride having a chemical composition shown in each of samples 11 to 19 and samples 111 to 116 in Table 2. It was further confirmed that the hard phase included the peripheral portion having a composition higher in content of W than a composition of the composite carbonitride in the core portion and the peripheral portion covered at least a part of the core portion. Table 2 shows the composition of the peripheral portion in cermet in each of samples 11 to 19 and samples 111 to 116. Fig. 2 further shows an SEM image resulting from shooting of a cross-section of cermet in sample 11. In Fig. 2, a region shown in a dark color (black) represents the core portion, and a region which covers at least a part or the entirety of the core portion and is shown with gray represents the peripheral portion. The hard phase is formed by a region constituted of the core portion and the peripheral portion. A region shown with white in Fig. 2 represents the metallic binder phase.

### <Fabrication of Cutting Tools in Samples 11 to 19 and Samples 111 to 116>

Cermet was shaped into a tool shape of CNGN120408 by such machining as grinding away a sintered skin representing the surface of cermet with a diamond wheel at number #400 (the number (#) representing smoothness, the larger number representing higher smoothness). Cutting tools in samples 11 to 19 and samples 111 to 116 were fabricated by subjecting cermet shaped into the tool shape to cutting edge treatment. These cutting tools were subjected to a cutting test below.

### <Cutting Test>

The cutting tools in samples 11 to 19 and samples 111 to 116 were subjected to a wear resistance test and a chipping resistance test under conditions below. Table 2 shows results. Good results are expected in both of the wear resistance test and the chipping resistance test when the composite carbonitride contained in the core portion of the cutting tool (cermet) had a prescribed composition.

### (Wear Resistance Test)

Work material: SCM435
Peripheral speed: 250 m/min.
Feed: 0.3 mm/rev.
Depth of cut: 1.5 mm
Cutting fluid: None

In the wear resistance test, a cutting time period (unit of minute) until a wear width of a flank of a cutting edge in each sample was equal to or greater than 0.15 mm was determined as a lifetime. As this time period is longer, wear resistance is evaluated as higher.

### (Chipping Resistance Test)

Work material: SCM435 with a slot groove
Peripheral speed: 60 m/min.
Feed: 0.5 mm/rev.
Depth of cut: 2.0 mm
Cutting fluid: None

In the chipping resistance test, the number of times of collision of the cutting edge with a slot groove until the cutting edge in each sample was chipped was evaluated. As the number is larger, chipping resistance is evaluated as higher. Denotation "Chipped in Early Stage" in the field of "Chipping Resistance" in Table 2 means that the number of times could not be counted because of chipping immediately after start of the test.

**Table 2**

| | Chemical Composition of Composite Carbonitride Ti_{1-X-Y} Nb_{X}W_{Y}C_{1-Z}N_{Z} | | | Composition of Peripheral Portion | Result of Cutting Test | |
|---|---|---|---|---|---|---|
| | X (Nb) | Y (W) | Z (N) | | Wear Resistance (Minute) | Chipping Resistance (Times) |
| Sample 11 | 0.15 | 0 | 0.5 | Ti_{0.78}Nb_{0.14}W_{0.08}C_{0.54}N_{0.46} | 14.4 | 4854 |
| Sample 12 | 0.10 | 0 | 0.3 | Ti_{0.83}Nb_{0.09}W_{0.08}C_{0.72}N_{0.28} | 15.9 | 3023 |
| Sample 13 | 0.10 | 0 | 0.5 | Ti_{0.83}Nb_{0.09}W_{0.08}C_{0.54}N_{0.46} | 13.6 | 4828 |
| Sample 14 | 0.10 | 0 | 0.6 | Ti_{0.83}Nb_{0.09}W_{0.08}C_{0.45}N_{0.55} | 12.6 | 5985 |
| Sample 15 | 0.20 | 0 | 0.3 | Ti_{0.73}Nb_{0.18}W_{0.09}C_{0.73}N_{0.27} | 17.6 | 2996 |
| Sample 16 | 0.20 | 0 | 0.4 | Ti_{0.73}Nb_{0.18}W_{0.09}C_{0.64}N_{0.36} | 15.7 | 3751 |
| Sample 17 | 0.20 | 0 | 0.6 | Ti_{0.73}Nb_{0.18}W_{0.09}C_{0.45}N_{0.55} | 13.3 | 5675 |
| Sample 18 | 0.15 | 0.02 | 0.5 | Ti_{0.76}Nb_{0.14}W_{0.1}C_{0.54}N_{0.46} | 15.2 | 3851 |
| Sample 19 | 0.15 | 0.05 | 0.5 | Ti_{0.73}Nb_{0.14}W_{0.13}C_{0.54}N_{0.46} | 19.1 | 2374 |
| Sample 111 | 0.05 | 0 | 0.5 | Ti_{0.87}Nb_{0.05}W_{0.08}C_{0.54}N_{0.46} | 6.6 | 5050 |
| Sample 112 | 0.25 | 0 | 0.5 | Ti_{0.68}Nb_{0.23}W_{0.09}C_{0.55}N_{0.45} | 11.2 | 3150 |
| Sample 113 | 0.15 | 0 | 0.2 | Ti_{0.78}Nb_{0.14}W_{0.08}C_{0.82}N_{0.18} | 16.6 | 1796 |
| Sample 114 | 0.15 | 0 | 0.7 | Ti_{0.78}Nb_{0.14}W_{0.08}C_{0.36}N_{0.64} | 7.9 | 5171 |
| Sample 115 | 0.15 | 0.07 | 0.5 | Ti_{0.71}Nb_{0.14}W_{0.15}C_{0.54}N_{0.46} | 20.5 | 1290 |
| Sample 116 | 0.15 | 0.10 | 0.5 | Ti_{0.69}Nb_{0.14}W_{0.17}C_{0.54}N_{0.46} | 24.2 | Chipped in Early Stage |

### <Discussion>

According to Table 2, it can be seen that the cutting tools according to the Example (samples 11 to 19) achieve both of wear resistance and chipping resistance in a balanced manner as compared with the cutting tools according to a comparative example (samples 111 to 116).

### «Example 3»

### <Fabrication of Cermet in Samples 21 to 27>

In fabricating cermet in samples 21 to 27, first powders in which the composite carbonitride was composed of Ti_{0.85}Nb_{0.15}C_{0.5}N_{0.5} were obtained by initially performing the first step by using oxide powders and carbon source powders the same as in Example 1. Mixed powders were obtained by blending the first powders, commercially available WC powders as second powders (a trademark "WC-25" manufactured by Japan New Metals Co., Ltd.), and commercially available Co powders (having a size of approximately 5 µm and manufactured by Kojundo Chemical Lab. Co., Ltd.) and commercially available Ni powders (having a size of approximately 0.4 µm and manufactured by Toho Titanium Co., Ltd.) as third powders at a blending composition shown in Table 3 (second operation) and mixing the powders for 48 hours by a wet ball mill method. Cermet in samples 21 to 27 was fabricated by thereafter performing the third step and the fourth step the same as in Example 1.

"TiNbCN" in the field of the blending composition shown in Table 3 means Ti_{0.85}Nb_{0.15}C_{0.5}N_{0.5}, and for example, "82TiNbCN" means that 82 mass % of Ti_{0.85}Nb_{0.15}C_{0.5}N_{0.5} is contained in the mixed powders.

A content (volume %) of the WC phase in cermet was found with EDX attached to an SEM with the method described above. Table 3 shows results. A composition of the hard phase of cermet was also analyzed with EDX attached to the SEM, and it was confirmed that the core portion was composed of Ti_{0.85}Nb_{0.15}C_{0.5}N_{0.5}. It was further confirmed that the hard phase included the peripheral portion having a composition higher in content of W than Ti_{0.85}Nb_{0.15}C_{0.5}N_{0.5} and the peripheral portion covered at least a part of the core portion. The composite carbonitride in the peripheral portion was composed of Ti_{0.82}Nb_{0.14}W_{0.04}C_{0.52}N_{0.48}, for example, in sample 21.

### <Fabrication of Cutting Tools in Samples 21 to 27>

Cermet was shaped into a tool shape of SNGN120408 by such machining as grinding away a sintered skin with a diamond wheel at number #400 (the number (#) representing smoothness, the larger number representing higher smoothness). Cutting tools in samples 21 to 27 were fabricated by subjecting cermet shaped into the tool shape to cutting edge treatment. These cutting tools were subjected to a cutting test below.

### <Cutting Test>

The cutting tools in samples 21 to 27 were subjected to a wear resistance test and a chipping resistance test under conditions below. Table 3 shows results. Good results are expected in both of the wear resistance test and the chipping resistance test when a content of the WC phase in the cutting tool was not higher than 1 volume %.

### (Wear Resistance Test)

Work material: SCM435
Peripheral speed: 200 m/min.
Feed: 0.2 mm/rev.
Depth of cut: 1.0 mm
Cutting fluid: Used

In the wear resistance test, a cutting time period (unit of minute) until a wear width of a flank of a cutting edge in each sample was equal to or greater than 0.15 mm was determined as a lifetime. As this time period is longer, wear resistance is evaluated as higher.

### (Chipping Resistance Test)

Work material: SCM435 with a slot groove
Peripheral speed: 100 m/min.
Feed: 0.5 mm/rev.
Depth of cut: 1.5 mm
Cutting fluid: None

In the chipping resistance test, the number of times of collision of the cutting edge with a slot groove until the cutting edge in each sample was chipped was evaluated. As the number is larger, chipping resistance is evaluated as higher.

**Table 3**

| | Blending Composition (mass. %) | Chemical Composition of Composite Carbonitride Ti_{1-X-Y}Nb_{X}W_{Y}C_{1-Z}N_{Z} | | | Amount of Precipitation of WC (vol %) | Result of Cutting Test | |
|---|---|---|---|---|---|---|---|
| | | X (Nb) | Y (W) | Z (N) | | Wear Resistance (Minute) | Chipping Resistance (Times) |
| Sample 21 | 82TiNbCN-2WC-8Co-8Ni | 0.15 | 0 | 0.5 | 0 | 45.7 | 3501 |
| Sample 22 | 79TiNbCN-5WC-8Co-8Ni | 0.15 | 0 | 0.5 | 0 | 46.3 | 3760 |
| Sample 23 | 74TiNbCN-10WC-8Co-8Ni | 0.15 | 0 | 0.5 | 0 | 36.1 | 3282 |
| Sample 24 | 69TiNbCN-15 WC-8Co-8Ni | 0.15 | 0 | 0.5 | 1.0 | 34.0 | 2786 |
| Sample 25 | 84TiNbCN-8Co-8Ni | 0.15 | 0 | 0.5 | 0 | 31.2 | 1642 |
| Sample 26 | 64TiNbCN-20WC-8Co-8Ni | 0.15 | 0 | 0.5 | 5.6 | 22.4 | 2505 |
| Sample 27 | 54TiNbCN-30WC-8Co-8Ni | 0.15 | 0 | 0.5 | 22.1 | 18.1 | 2016 |

### <Discussion>

According to Table 3, it is understood that the cutting tools (cermet) in samples 21 to 24 in which a content of the WC phase was not higher than 1 volume % were higher in both of wear resistance and chipping resistance than the cutting tools (cermet) in samples 26 to 27 in which a content of the WC phase exceeded 1 volume %. In sample 25, no WC was added and no peripheral portion composed to be higher in content of W than the core portion was formed. Therefore, sample 25 was poorer in both of wear resistance and chipping resistance than the cutting tools in samples 21 to 24. Sample 25 represents a comparative example because it does not include a peripheral portion.

### «Example 4»

### <Fabrication of Samples 31 to 37>

In fabricating cermet in samples 31 to 37, initially, first powders to which V₂O₅ (having a purity of 3 N and manufactured by Kojundo Chemical Lab. Co., Ltd.), Cr₂O₃ (having a size of approximately 3 µm and manufactured by Kojundo Chemical Lab. Co., Ltd.), and MoO₃ (having a purity of 3 N and manufactured by Kojundo Chemical Lab. Co., Ltd.) were added such that an impurity (V, Cr, and Mo) of which total content (atomic %) occupied in a total amount of Ti, Nb, W, V, Cr, and Mo was as shown in Table 4 was contained in a chemical composition of the composite carbonitride were prepared. Cermet in samples 31 to 37 was fabricated otherwise as in sample 11 by performing a manufacturing process the same as in Example 2. Cermet was shaped into CNGN120408.

Cutting tools in samples 31 to 37 were fabricated by employing the cermet in samples 31 to 37 as a substrate and covering the substrate with a coating film composed of TiAlN under PVD conditions below.

### (PVD Condition)

AlTi target (having a target composition of Al:Ti = 50:50)
Arc current: 100 A
Bias voltage: -100 V
Pressure in chamber: 4.0 Pa
Reaction gas: nitrogen

The cutting tools in samples 31 to 37 were subjected to a cutting test (a chipping resistance test) under conditions below. Table 4 shows results.

### (Chipping Resistance Test)

Work material: SCM435 with a slot groove
Peripheral speed: 60 m/min.
Feed: 0.6 mm/rev.
Depth of cut: 2.0 mm
Cutting fluid: None

In the chipping resistance test, a time period for cutting was set to one minute, and a sample in which no chipping was observed at the time point of lapse of one minute was determined as a good product. For a sample of which chipping was visually observed by the time of lapse of one minute, time (second) when chipping was observed is shown in Table 4.

**Table 4**

| | Chemical Composition of Composite Carbonitride Ti_{1-X-Y}Nb_{X}W_{Y}C_{1-Z}N_{Z} | | | Amount of Impurity (atom. %) | | | Chipping Resistance |
|---|---|---|---|---|---|---|---|
| | X (Nb) | Y (W) | Z (N) | Amount of V | Amount of Cr | Amount of Mo | |
| Sample 31 | 0.15 | 0 | 0.5 | 1 | 0 | 0 | No Chipping (Good Product) |
| Sample 32 | 0.15 | 0 | 0.5 | 0 | 1 | 0 | No Chipping (Good Product) |
| Sample 33 | 0.15 | 0 | 0.5 | 0 | 0 | 1 | No Chipping (Good Product) |
| Sample 34 | 0.15 | 0 | 0.5 | 0 | 0 | 2 | 21 Seconds |
| Sample 35 | 0.15 | 0 | 0.5 | 0 | 0 | 3 | 3 Seconds |
| Sample 36 | 0.15 | 0 | 0.5 | 0 | 1 | 1 | 19 Seconds |
| Sample 37 | 0.15 | 0 | 0.5 | 1 | 1 | 0 | 15 Seconds |

### <Discussion>

According to Table 4, it is understood that the cutting tools in samples 31 to 33 in which a total content of V, Cr, and Mo occupied in a total amount of Ti, Nb, W, V, Cr, and Mo was lower than 2 atomic % were higher in chipping resistance than the cutting tools in samples 34 to 37.

### «Example 5»

### <Fabrication of Cermet in Samples 41 to 46>

### (First Step)

In fabricating cermet in samples 41 to 46, mixed oxide powders identical in composition to those in sample 11 were obtained by initially performing the first operation by employing oxide powders and carbon source powders the same as in Example 2. After the second operation as in Example 2, a powder precursor was obtained by performing heat treatment under conditions of a sintering temperature of 2200°C and a holding time period of one hour in a nitrogen atmosphere at a reduced pressure (0.1 kPa) in the third operation. In succession, first powders in which primary particles had an average particle size (D50) of 3.8 µm were obtained by breaking the powder precursor in the fourth operation. The average particle size was measured with the use of a laser diffraction particle size distribution measurement instrument described above.

Granularity of powders in samples 41 to 46 was adjusted such that the core portion had a grain size as shown in Table 5 by breaking the first powders having the particle size described above with the use of a ball mill.

### (Second to Fourth Steps)

Cermet in samples 41 to 46 was fabricated by subjecting the first powders of which granularity described above was adjusted to the second to fourth steps as in Example 2.

### <Fabrication of Cutting Tools in Samples 41 to 46>

Cutting tools in samples 41 to 46 were fabricated with the cermet in samples 41 to 46 by the method the same as in Example 2. The cutting tools in samples 41 to 46 were subjected to a wear resistance test and a chipping resistance test under conditions as in Example 2. Table 5 shows results. Since the cutting tool in sample 42 and the cutting tool in sample 11 were identical to each other in grain size of the core portion and also in the manufacturing method, the same results were obtained in the wear resistance test and the chipping resistance test below.

**Table 5**

| | Average Crystal Grain Size of Core Portion (µm) | Wear Resistance (Minute) | Chipping Resistance (Times) |
|---|---|---|---|
| Sample 41 | 0.5 | 14.8 | 4253 |
| Sample 42 | 1.0 | 14.4 | 4854 |
| Sample 43 | 2.2 | 14.0 | 5064 |
| Sample 44 | 3.0 | 12.9 | 5140 |
| Sample 45 | 0.3 | 15.0 | 3582 |
| Sample 46 | 3.5 | 11.8 | 5107 |

### <Discussion>

According to Table 5, it can be seen that the cutting tools in samples 41 to 44 in which the core portion had a grain size from 0.5 to 3 µm achieved both of wear resistance and chipping resistance in a balanced manner as compared with the cutting tools in samples 45 to 46.

Though the embodiment and the examples of the present invention have been described as above, combination of features in each embodiment and example described above as appropriate is also originally intended.

It should be understood that the embodiment and the examples disclosed herein are illustrative and non-restrictive in every respect.

### REFERENCE SIGNS LIST

1 hard phase; 11 core portion; 12 peripheral portion; 2 metallic binder phase

## Claims

1. Cermet comprising:
a hard phase (1) which contains carbonitride containing Ti and Nb;
a metallic binder phase (2) containing an iron-group element; and
optionally a WC phase composed of WC, the content of the WC phase being not higher than 1 volume %,
the hard phase (1) including a granular core portion (11) and a peripheral portion (12) which covers at least a part of the core portion (11),
the core portion (11) containing composite carbonitride expressed as Ti_{1-x-Y}Nb_{X}W_{Y}C_{1-Z}N_{Z}, where X is 0.1 or more and 0.6 or less, Y is 0 or more and 0.05 or less and Z is 0.3 or more and 0.6 or less, and
the peripheral portion (12) being composed to be higher in content of W than the core portion (11),
wherein:
in the core portion (11), a total amount of V, Cr, and Mo occupied in a total amount of Ti, Nb, W, V, Cr, and Mo is smaller than 2 atomic %; and
the core portion (11) has an average crystal grain size not smaller than 0.5 µm and not greater than 3 µm, the average crystal grain size being measured by the method described in the description.

2. The cermet according to claim 1, wherein
X is not smaller than 0.1 and not greater than 0.2.

3. The cermet according to claim 1, wherein
X is not smaller than 0.4 and not greater than 0.6.

4. The cermet according to any one of claims 1 to 3, the cermet containing no WC phase composed of WC.

5. A cutting tool comprising the cermet according to any one of claims 1 to 4.

6. The cutting tool according to claim 5, the cutting tool comprising:
a substrate composed of the cermet; and
a coating film which covers the substrate.

7. A method of manufacturing the cermet of any of claims 1 to 4, the method comprising:
obtaining first powders composed of composite carbonitride expressed as Ti_{1-X-Y}Nb_{X}W_{Y}C_{1-Z}N_{Z};
obtaining mixed powders by mixing the first powders, second powders containing W, and third powders containing an iron-group element;
obtaining a formed material by pressing the mixed powders; and
obtaining a sintered material by sintering the formed material,
X being 0.1 or more and 0.6 or less,
Y being 0 or more and 0.05 or less,
Z being 0.3 or more and 0.6 or less,
the obtaining first powders including operations of
obtaining mixed oxide powders by mixing oxide powders containing two elements of Ti and Nb or three elements of Ti, Nb, and W and carbon source powders containing carbon, wherein the oxide powders may contain at least one element selected from the group consisting of V, Cr, and Mo and wherein, in the oxide powders, a total content of V, Cr, and Mo is lower than 2 atomic % with respect to a total amount of Ti, Nb, W, V, Cr, and Mo,
obtaining a granulated material by granulating the mixed oxide powders,
obtaining a powder precursor composed of the composite carbonitride by subjecting the granulated material to heat treatment at a temperature not lower than 1800°C in an atmosphere containing nitrogen gas, and
obtaining the first powders by breaking the powder precursor.

## Patentansprüche

1. Cermet, das folgendes umfasst:
eine Hartphase (1), die Ti und Nb enthaltendes Carbonitrid enthält;
eine metallische Binderphase (2), die ein Element der Eisengruppe enthält; und
optional eine WC-Phase, die aus WC zusammengesetzt ist, wobei der Anteil der WC-Phase nicht höher als 1 Vol.-% ist,
wobei die Hartphase (1) einen gekörnten Kernteil (11) und einen Umfangsteil (12), der mindestens einen Teil des Kernteils (11) bedeckt, einschließt,
der Kernteil (11) Verbund-Carbonitrid, das als Ti_{1-X-Y}Nb_{X}W_{Y}C_{1-Z}N_{Z} ausgedrückt wird, worin X 0,1 oder mehr und 0,6 oder weniger ist, Y 0 oder mehr und 0,05 oder weniger ist und Z 0,3 oder mehr und 0,6 oder weniger ist, enthält und
der Umfangsteil (12) so zusammengesetzt ist, dass er einen höheren Anteil an W besitzt als der Kernteil (11),
wobei
in dem Kernteil (11) eine Gesamtmenge von V, Cr und Mo die in einer Gesamtmenge von Ti, Nb, W, V, Cr und Mo enthalten ist, kleiner als 2 Atom-% ist; und
der Kernteil (11) eine mittlere Kristallkorngröße von nicht kleiner als 0,5 µm und nicht größer als 3 µm besitzt, wobei die mittlere Kristallkorngröße mit dem in der Beschreibung beschriebenen Verfahren gemessen wird.

2. Cermet gemäß Anspruch 1, in dem X nicht kleiner als 0,1 und nicht größer als 0,2 ist.

3. Cermet gemäß Anspruch 1, in dem X nicht kleiner als 0,4 und nicht größer als 0,6 ist.

4. Cermet gemäß mindestens einem der Ansprüche 1 bis 3, wobei das Cermet keine WC-Phase enthält, die aus WC zusammengesetzt ist.

5. Schneidwerkzeug, das das Cermet gemäß mindestens einem der Ansprüche 1 bis 4 umfasst.

6. Schneidwerkzeug gemäß Anspruch 5, wobei das Schneidwerkzeug folgendes umfasst:
ein aus dem Cermet zusammengesetztes Substrat; und
einen Beschichtungsfilm, der das Substrat bedeckt.

7. Verfahren zur Herstellung des Cermets gemäß mindestens einem der Ansprüche 1 bis 4, wobei das Verfahren die folgenden Schritte umfasst:
Erhalten erster Pulver, die aus Verbund-Carbonitrid, das als Ti_{1-X-Y}Nb_{X}W_{Y}C_{1-Z}N_{Z} ausgedrückt ist, zusammengesetzt sind;
Erhalten von gemischten Pulvern, indem die ersten Pulver, W enthaltende zweite Pulver und ein Element der Eisengruppe enthaltende dritte Pulver gemischt werden;
Erhalten eines geformten Materials, indem die gemischten Pulver gepresst werden; und
Erhalten eines gesinterten Materials, indem das geformte Material gesintert wird,
wobei X 0,1 oder mehr und 0,6 oder weniger ist,
Y 0 oder mehr und 0,05 oder weniger ist,
Z 0,3 oder mehr und 0,6 oder weniger ist,
wobei das Erhalten der ersten Pulver Arbeitsschritte einschließt, dass
gemischte Oxidpulver erhalten werden, indem Oxidpulver, die zwei Elemente von Ti und Nb oder drei Elemente von Ti, Nb und W enthalten, und Kohlenstoffquellen-Pulver, die Kohlenstoff enthalten, gemischt werden, wobei die Oxidpulver mindestens ein Element, ausgewählt aus der Gruppe, bestehend aus V, Cr und Mo enthalten können und wobei in den Oxidpulvern ein Gesamtanteil an V, Cr und Mo kleiner als 2 Atom-%, bezogen auf eine Gesamtmenge von Ti, Nb, W, V, Cr und Mo, ist,
ein granuliertes Material erhalten wird, indem die gemischten Oxidpulver granuliert werden,
ein Pulvervorläufer, der aus dem Verbund-Carbonitrid zusammengesetzt ist, erhalten wird, indem das granulierte Material der Wärmebehandlung bei einer Temperatur nicht niedriger als 1.800°C in einer Atmosphäre, die Stickstoffgas enthält, unterzogen wird und
die ersten Pulver durch Brechen des Pulvervorläufers erhalten werden.

## Revendications

1. Cermet comprenant :
une phase dure (1) qui contient un carbonitrure contenant Ti et Nb;
une phase de liant métallique (2) contenant un élément du groupe du fer ; et
éventuellement une phase de WC composée de WC, la teneur en la phase de WC n'étant pas supérieure à 1 % en volume,
la phase dure (1) contenant une portion de coeur granulaire (11) et une portion périphérique (12) qui couvre au moins une partie de la portion de coeur (11),
la portion de coeur (11) contenant un carbonitrure composite représenté par Ti_{1-X-Y}Nb_{X}W_{Y}C_{1-Z}N_{Z} où X vaut 0,1 ou plus et 0,6 ou moins, Y vaut 0 ou plus et 0,05 ou moins et Z vaut 0,3 ou plus et 0,6 ou moins, et
la portion périphérique (12) étant composée de façon à avoir une teneur en W supérieure à celle de la portion de coeur (11),
dans lequel :
dans la portion de coeur (11), la quantité totale de V, Cr et Mo dans la quantité totale de Ti, Nb, W, V, Cr et Mo est inférieure à 2 % atomiques ; et
la portion de coeur (11) a une grosseur de grain cristallin moyenne non inférieure à 0,5 µm et non supérieure à 3 µm, la grosseur de grain cristallin moyenne étant mesurée par le procédé décrit dans la description.

2. Cermet selon la revendication 1, dans lequel X n'est pas inférieur à 0,1 et pas supérieur à 0,2.

3. Cermet selon la revendication 1, dans lequel X n'est pas inférieur à 0,4 et pas supérieur à 0,6.

4. Cermet selon l'une quelconque des revendications 1 à 3, le cermet ne contenant pas de phase de WC composée de WC.

5. Outil de coupe comprenant le cermet selon l'une quelconque des revendications 1 à 4.

6. Outil de coupe selon la revendication 5, l'outil de coupe comprenant :
un substrat composé du cermet ; et
un film de revêtement qui recouvre le substrat.

7. Procédé de fabrication du cermet de l'une quelconque des revendications 1 à 4, le procédé comprenant :
l'obtention de premières poudres composées de carbonitrure composite représenté par Ti_{1-X-Y}Nb_{X}W_{Y}C_{1-Z}N_{Z};
l'obtention de poudres mixtes par mélange des premières poudres, de deuxièmes poudres contenant W, et de troisièmes poudres contenant un élément du groupe du fer ;
l'obtention d'un matériau façonné par pressage des poudres mixtes ; et
l'obtention d'un matériau fritté par frittage du matériau façonné,
X valant 0,1 ou plus et 0,6 ou moins,
Y valant 0 ou plus et 0,05 ou moins,
Z valant 0,3 ou plus et 0,6 ou moins,
l'obtention des premières poudres comprenant les opérations de
obtention de poudres d'oxydes mixtes par mélange de poudres d'oxydes contenant les deux éléments Ti et Nb ou les trois éléments Ti, Nb et W et des poudres de sources de carbone contenant du carbone, parmi lesquelles les poudres d'oxydes peuvent contenir au moins un élément choisi dans le groupe constitué par V, Cr et Mo, et parmi lesquelles, dans les poudres d'oxydes, la teneur totale en V, Cr et Mo est inférieure à 2 % atomiques par rapport à la quantité totale de Ti, Nb, W, V, Cr et Mo,
obtention d'un matériau granulé par granulation des poudres d'oxydes mixtes,
obtention d'un précurseur de poudre composé du carbonitrure composite par soumission du matériau granulé à un traitement thermique à une température non inférieure à 1800°C dans une atmosphère contenant de l'azote gazeux, et
obtention des premières poudres par brisure du précurseur de poudre.
